# EUROPEAN PATENT SPECIFICATION

(11) **EP 3 444 455 B1**
(45) Date of publication and mention of the grant of the patent: **08.04.2020**
(21) Application number: 17782096.6
(22) Date of filing: 09.02.2017
(51) Int. Cl.: F01N 9/00, F01N 3/023, F01N 3/18, F01N 3/24

(54) **FILTER REPRODUCTION SYSTEM, ECU AND FILTER REPRODUCTION PROGRAM**
FILTERREPRODUKTIONSSYSTEM, ECU UND FILTERREPRODUKTIONSPROGRAMM
SYSTÈME DE REPRODUCTION DE FILTRE, ECU ET PROGRAMME DE REPRODUCTION DE FILTRE

(30) Priority: 11.04.2016 JP 2016078779
(43) Date of publication of application: 20.02.2019
(73) Proprietor: Bosch Corporation, Tokyo 150-8360 (JP)
(72) Inventor: HATTORI Takayuki, Yokohama-shi Kanagawa 224-8501 (JP)
(74) Representative: Bee, Joachim
(86) International application number: PCT/JP2017/004656
(87) International publication number: WO 2017/179277

(56) References cited:
- EP-A1- 2 796 681
- FR-A3- 2 966 514
- JP-A- 2004 293 413
- JP-A- 2005 133 607
- JP-A- 2011 089 466

## Description

### Technical Field

The present invention relates to a filter regeneration system, an ECU, and a filter regeneration program and is in particular suited for application to a filter regeneration system, an ECU, and a filter regeneration program displaying an estimated remaining filter regeneration time.

### Background Art

Conventionally, a collection device referred to as a diesel particulate filter (DPF) has been known. The diesel particulate filter (DPF) collects particulate matter (PM) contained in exhaust gas of an internal combustion engine (an engine) (for example, see PTL 1). The DPF is a component that collects the PM from a diesel vehicle to prevent PM emissions to the atmosphere.

In the vehicle provided with the DPF, in order to prevent deterioration of a filter function caused by clogging, DPF regeneration is performed to regenerate the DPF by burning the DPF using a heater or the like (in particular, burning off smut of the PM). Smut is also referred to as soot. This DPF regeneration is automatically initiated during travel by control of an engine control unit (ECU) controlling the engine. Meanwhile, in the case where the regeneration during the travel is insufficient, the DPF regeneration is possibly initiated by a driver's switch operation when the vehicle is stopped.

A DPF system calculates a time used as an indication of terminating the DPF regeneration in advance, and terminates the DPF regeneration at the calculated time as the indication.

An other exhaust emission control system by which an amount of PM-collection can be estimated is disclosed in PTL 2.

### Citation List

### Patent Literature

PTL 1: JP-A-2013-160045
PTL 2: JP 2004 293413 A

### Summary of Invention

### Technical Problem

The time used as the indication of terminating the DPF regeneration is only used by the ECU to control the DPF regeneration and is not notified to the driver. Accordingly, the driver cannot recognize the time as the indication of terminating the DPF regeneration and thus cannot create an efficient travel plan for which the DPF regeneration is considered.

In view of the above, the present invention has a purpose of proposing a filter regeneration system, an ECU, and a filter regeneration program capable of creating an efficient travel plan for a driver by notifying the driver of an estimated remaining DPF regeneration time.

### Solution to Problem

In order to achieve the above purpose, the present invention is a filter regeneration system according to claim 1 for a DPF collecting particulate matter. The filter regeneration system includes an ECU that controls filter regeneration processing for the DPF. The ECU calculates a remaining soot amount (Rp) at a current time point on the basis of a physical model indicative of an actual remaining soot amount, calculates a remaining soot amount (Rt) at the current time point on the basis of a time model indicative of a theoretical remaining soot amount, calculates an estimated remaining DPF regeneration time (Tp, Tt) at the current time point on the basis of larger one of the remaining soot amounts (Rp, Rt), and notifies a driver of the estimated remaining DPF regeneration time (Tp, Tt).

Furthermore an ECU according to claim 5 and a program according to claim 6 are provided.

### Advantageous Effects of Invention

According to the present invention, an efficient travel plan can be created for the driver by notifying the driver of the estimated remaining DPF regeneration time.

### Brief Description of Drawings

Fig. 1 is an overall configuration diagram of a filter regeneration system.
Fig. 2 is an internal configuration diagram of an ECU.
Fig. 3 is a flowchart of estimated remaining DPF regeneration time calculation processing.
Fig. 4 is a flowchart of the estimated remaining DPF regeneration time calculation processing at the time when a DPF is regenerated.
Fig. 5 is a conceptual graph of a physical model.
Fig. 6 is a conceptual graph of a display model.
Fig. 7 is a conceptual chart of a time model.

### Description of Embodiments

An embodiment of the present invention will be described with reference to the drawings. Note that the following description does not limit the present invention and can appropriately be changed within the scope of the present invention.

### (1) Configuration of Filter Regeneration System

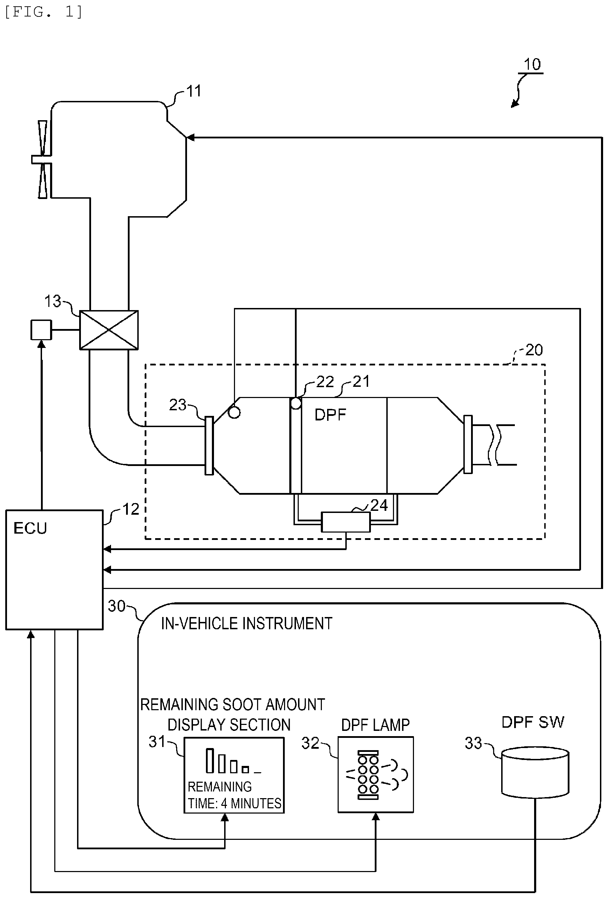

Fig. 1 is an overall configuration diagram of a filter regeneration system 10. The filter regeneration system 10 includes: an engine 11 that serves as a power source of a vehicle; an ECU 12 that controls the engine 11; an aftertreatment device 20 that treats exhaust gas from the engine 11; and an in-vehicle instrument 30 that acquires information of the vehicle from the ECU 12 and displays the information of the vehicle for a driver.

The aftertreatment device 20 includes: a DPF 21 that performs aftertreatment of the exhaust gas from the engine 11; a temperature sensor 22 that acquires a temperature T_{EXH} of the exhaust gas flowing into the DPF 21; a flow rate sensor 23 that acquires a flow rate M_{EXH} of the exhaust gas flowing into the DPF 21; and a pressure sensor 24 that detects a differential pressure P_{EXH} between the exhaust gas on an upstream side of the DPF and the exhaust gas on a downstream side of the DPF.

The in-vehicle instrument 30 includes: a remaining soot amount display section 31 that displays an integrated soot accumulation amount or a remaining soot amount; a DPF lamp 32 that notifies the driver of a state of the DPF by flashing or lighting; and a DPF switch 33 that is operated by the driver who has determined the state of the DPF from a state of the DPF lamp. Note that, when the driver operates the DPF switch 33 to instruct the ECU 12 to initiate DPF regeneration, the ECU 12 instructs the engine 11 to initiate the DPF regeneration.

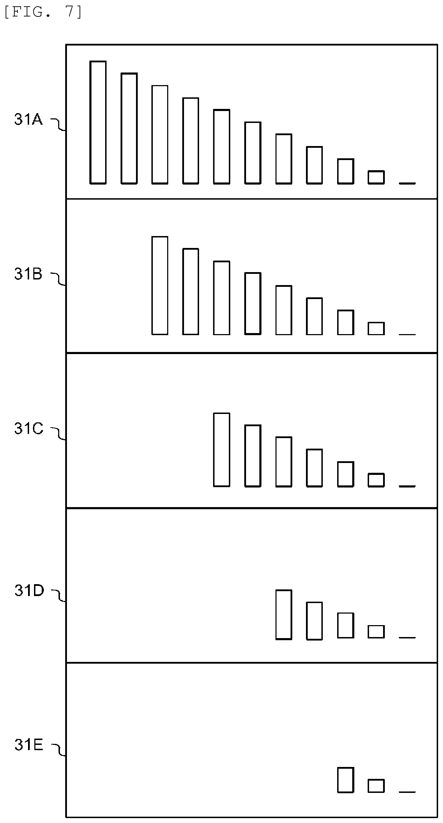

The remaining soot amount display section 31 may display the remaining soot amount by arranging bars in different lengths as in Fig. 7, which will be described below, or may display a remaining time. Alternatively, the remaining soot amount display section 31 may display estimated finish time by referring to current time. The remaining soot amount display section 31 is instructed by a display instruction section 120E, which will be described below.

The ECU 12 is connected to the engine 11 and the aftertreatment device 20 and calculates the integrated soot accumulation amount or the remaining soot amount in a specified cycle on the basis of the information acquired from the aftertreatment device 20 (the temperature T_{EXH}, the flow rate M_{EXH}, and the differential pressure P_{EXH} of the exhaust gas flowing into the DPF 21).

Upon the DPF regeneration, the ECU 12 calculates an integrated soot reduction amount as a burned soot amount in a specified cycle from the temperature T_{EXH} and the like of the exhaust gas and subtracts the integrated soot reduction amount from the integrated soot accumulation amount. In this way, the remaining soot amount at the time when soot is burned off is calculated.

The specified cycle may be a short cycle, such as 20 milliseconds, that can be displayed such that it seems for the driver that the cycle is constantly updated. Alternatively, the specified cycle may be a relatively long cycle, such as one second, 30 seconds, or one minute, so that the driver can recognize an update cycle.

For the DPF regeneration, two models are defined as a remaining soot amount calculation method. One of the models is a physical model to calculate the remaining soot amount in the specified cycle as described above. The other model is a time model to calculate the remaining soot amount on the basis of the information acquired from the aftertreatment device 20 (the temperature T_{EXH}, the flow rate M_{EXH}, and the differential pressure P_{EXH} of the exhaust gas flowing into the DPF 21) only at the initiation of the DPF regeneration and thereafter reduce the calculated remaining soot amount per the specified cycle in a specified period (based on a specified linear function that defines a linear relationship between the time and the remaining soot amount).

The specified period may be a time (the longest time) that is taken until the remaining soot amount becomes zero in the case where the vehicle travels on a congested road, for example. Alternatively, the specified period may be a time (a standard time) that is taken until the remaining soot amount becomes zero in the case where the vehicle travels on a relatively major road, such as a highway, at a legal speed. The specified period can be set to any time, such as a value based on an experiment or a value acquired from a calculation result based on each type of the information from the ECU 12 at the initiation of the DPF regeneration.

The exhaust gas flow rate M_{EXH} may not be the value acquired from the flow rate sensor 23 but may be a value calculated from an intake airflow rate measured value, an opening amount of an EGR valve 13, an engine speed detected by a sensor, and the like. In addition, the remaining soot amount may be calculated from the engine speed and an engine load that is computed from a fuel injection amount (an instruction value from the ECU 12 to the engine 11).

### (2) Internal Configuration of ECU

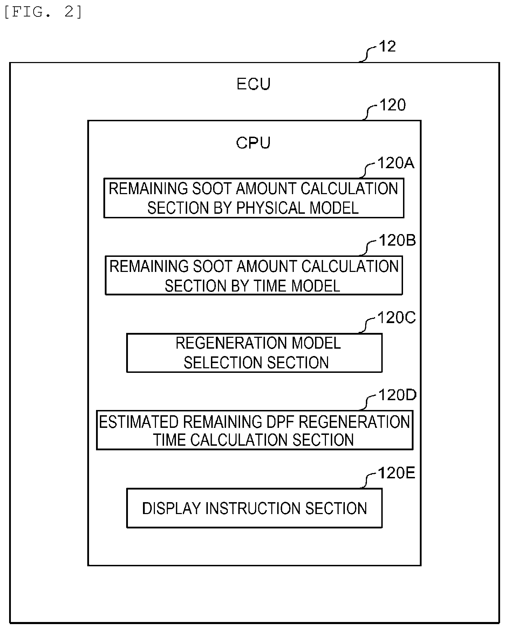

As illustrated in Fig. 2, the ECU 12 has a central processing unit (CPU) 120 that includes: a remaining soot amount calculation section 120A by the physical model; a remaining soot amount calculation section 120B by the time model; a regeneration model selection section 120C that selects a calculation result of one of the remaining soot amount by the physical model and the remaining soot amount by the time model; an estimated remaining DPF regeneration time calculation section 120D that calculates an estimated remaining DPF regeneration time on the basis of the selected calculation result; and the display instruction section 120E that provides a display instruction to the in-vehicle instrument 30 so as to make the in-vehicle instrument 30 display the calculated estimated remaining DPF regeneration time.

Each of the remaining soot amount calculation section 120A by the physical model, the remaining soot amount calculation section 120B by the time model, the regeneration model selection section 120C, the estimated remaining DPF regeneration time calculation section 120D, and the display instruction section 120E is realized by software and/or hardware.

### (3) Remaining DPF Regeneration Time Estimation Processing

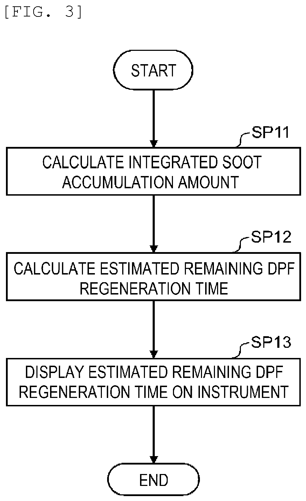

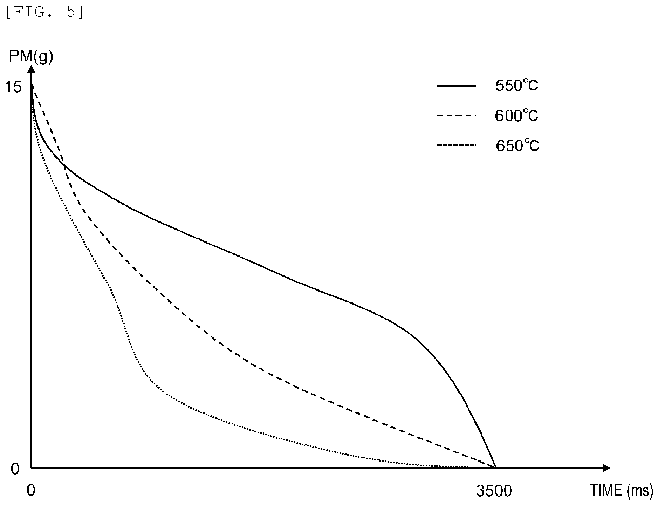

The ECU 12 executes processing as illustrated in Fig. 3. First, the remaining soot amount calculation section 120A by the physical model calculates the integrated soot accumulation amount or the remaining soot amount (SP11). Next, the estimated remaining DPF regeneration time calculation section 120D converts the estimated remaining DPF regeneration time from the integrated soot accumulation amount or the remaining soot amount based on a graph illustrated in Fig. 5, which will be described below, and calculates the estimated remaining DPF regeneration time (SP12). Finally, the display instruction section 120E instructs the remaining soot amount display section 31 of the in-vehicle instrument 30 to display the estimated remaining DPF regeneration time (SP13). These types of the processing (SP11 to SP13) are repeatedly executed in a specified cycle. Note that contents of the display instructed to the in-vehicle instrument 30 by the display instruction section 120E may not only be the estimated remaining DPF regeneration time, and the display instruction section 120E may instruct the in-vehicle instrument 30 to display the integrated soot accumulation amount or the remaining soot amount.

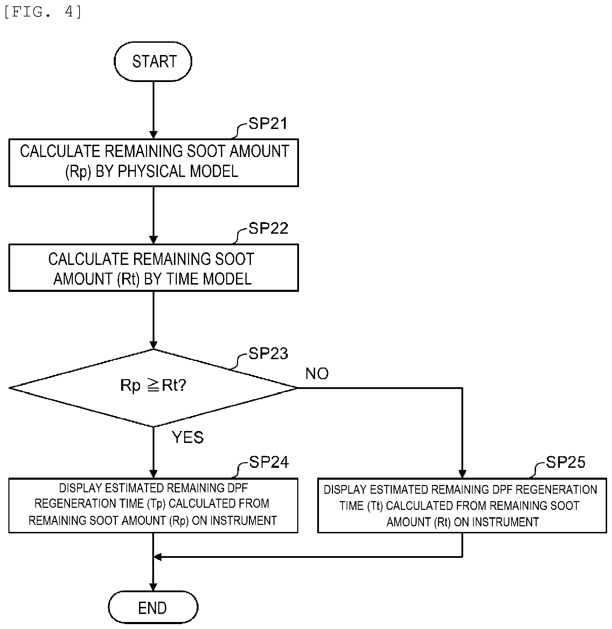

In addition, the ECU 12 executes processing as illustrated in Fig. 4 upon the DPF regeneration. First, the remaining soot amount calculation section 120A by the physical model calculates a remaining soot amount (Rp) by the physical model (SP21). Next, the remaining soot amount calculation section 120B by the time model calculates a remaining soot amount (Rt) by the time model (SP22).

Next, the regeneration model selection section 120C compares the remaining soot amount (Rp) calculated by the physical model and the remaining soot amount (Rt) calculated by the time model and selects a larger value (a larger remaining soot amount) thereof (SP23). The estimated remaining DPF regeneration time calculation section 120D calculates an estimated remaining DPF regeneration time (Tp or Tt) that corresponds to the remaining soot amount (Rp or Rt) selected in step SP23. The display instruction section 120E instructs the in-vehicle instrument 30 to display the estimated remaining DPF regeneration time (Tp or Tt) (SP24, SP25). These types of the processing (SP21 to SP25) are repeatedly executed in a specified cycle. Note that contents of the display instructed to the in-vehicle instrument 30 by the display instruction section 120E may not only be the estimated remaining DPF regeneration time (Tp or Tt), and the display instruction section 120E may instruct the in-vehicle instrument 30 to display the remaining soot amount (Rp or Rt) .

Fig. 5 is a graph that is used when the remaining soot amount calculation section 120A by the physical model calculates the integrated soot accumulation amount or the remaining soot amount. Fig. 5 illustrates a relationship between a PM amount and a time taken to burn off PM for every temperature T_{EXH} of the exhaust gas flowing into the DPF 21 in the case where the flow rate M_{EXH} of the exhaust gas to the DPF 21 is constant. Here, the PM can be regarded to be almost equal to the integrated soot accumulation amount or the remaining soot amount. In Fig. 5, a case where the temperature T_{EXH} of the exhaust gas flowing into the DPF 21 is 550 °C is indicated by a solid line, a case where the temperature T_{EXH} of the exhaust gas flowing into the DPF 21 is 600 °C is indicated by a broken line, and a case where the temperature T_{EXH} of the exhaust gas flowing into the DPF 21 is 650 °C is indicated by a dotted line.

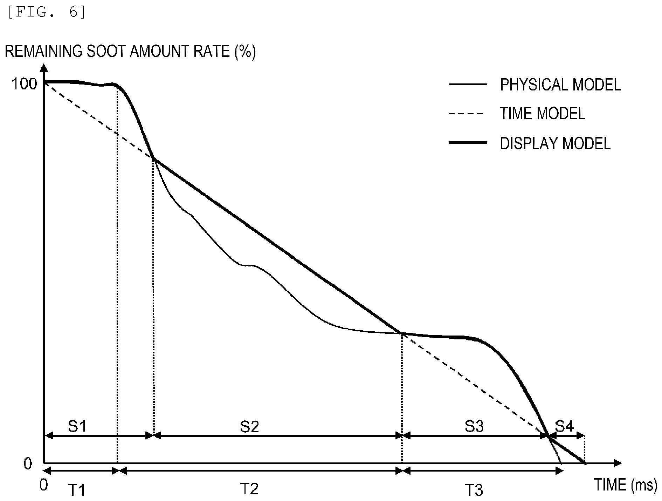

The physical model as illustrated in Fig. 5 is referred in the specified cycle, for example, at every 20 milliseconds. In this way, it is possible to calculate the PM amount or either one of the integrated soot accumulation amount and the remaining soot amount corresponding to the temperature T_{EXH} and the flow rate M_{EXH} of the exhaust gas flowing into the DPF 21 at the time. By comparing the remaining soot amount calculated at the time and the integrated soot accumulation amount at the initiation of the regeneration, a remaining soot amount rate can be calculated, and a relationship as the physical model indicated by a solid line in Fig. 6 is established.

In a period T1 in Fig. 6, in regard to the physical model indicated by the solid line, the remaining soot amount rate is hardly reduced because the temperature T_{EXH} of the exhaust gas flowing into the DPF 21 is low (does not reach 550 °C) . In a period T2, the temperature T_{EXH} of the exhaust gas flowing into the DPF 21 is stabilized at approximately 550 °C to 600 °C, and the remaining soot amount rate is reduced naturally. In a period T3, a reduction rate of the remaining soot amount rate is slowed because the temperature T_{EXH} is reduced again.

A graph of the display model indicated by a bold line in Fig. 6 is acquired by graphically illustrating the processing result in Fig. 4. In the case where the processing in steps SP23 to SP25 is illustrated graphically, the graph by the physical model and a graph by the time model are compared, and a larger value on the remaining soot amount rate axis with respect to the same time axis is adopted for the graph.

More specifically, in periods S1 and S3, the graph of the display model is the same as the graph of the physical model, and in periods S2 and S4, the graph of the display model is the same as the graph of the time model. That is, the model having the higher remaining soot amount rate is selected as the display model and is actually displayed.

Fig. 7 is a chart illustrating the remaining soot amount calculated by the remaining soot amount calculation section 120B by the time model. As described above, in the processing based on the time model, the integrated soot accumulation amount and the specified period based on the integrated soot accumulation amount are calculated at the initiation of the DPF regeneration (31A). Thereafter, the integrated soot accumulation amount is reduced at the certain rate at every certain time, so as to calculate (estimate) the remaining soot amount. Note that an example of displaying the remaining soot amount rate, which is acquired by comparing the integrated soot accumulation amount at the initiation of the regeneration and the remaining soot amount, instead of the remaining soot amount is illustrated herein.

31A is an image that is displayed in the remaining soot amount display section 31 when the remaining soot amount rate is 100%. In the cases where the remaining soot amount rate is only based on the time model and time elapses at the same intervals among 31A, 31B, 31C, 31D, and 31E, the remaining soot amount rate is reduced equally from 100% to 80%, 60%, 40%, and 20%. An update cycle of the remaining soot amount rate is set as the specified cycle. Note that a dotted line in Fig. 6 represents a graph illustrating a relationship between the remaining soot amount rate by the time model and the time.

### (4) Effects by This Embodiment

As it has been described so far, in the filter regeneration system 10 according to this embodiment, on the basis of the two models of the physical model and the time model, the integrated accumulation amount or the remaining soot amount, the estimated remaining DPF regeneration time, and the estimated DPF regeneration time are displayed on the in-vehicle instrument 30.

Thus, the driver can recognize the time as an indication of terminating the DPF regeneration and thus can create an efficient travel plan for which the DPF regeneration is considered. In addition, of the two models of the physical model and the time model, the model having the estimation result of the longer time is adopted as the display model. Thus, the travel plan with a spare time can be created.

Note that this embodiment can also be applied to a case where the DPF regeneration is performed during travel (automatic regeneration) and a case where the DPF regeneration is performed by operating the DPF switch 33 by the driver and bringing the engine into a specified engine operation state when the vehicle is stopped (manual regeneration). The effects of this embodiment are particularly exerted when the embodiment is applied to the automatic regeneration. Because the engine operation state is changed from moment to moment in the automatic regeneration, a result that is not based on the estimation result by the time model is frequently produced.

However, even when the DPF regeneration time is longer than the estimation result by the time model, the result is corrected by the estimation result by the physical model, and the result as of the display model is displayed on the in-vehicle instrument 30. Thus, the slowed reduction of the remaining soot amount, the slowed reduction of the remaining time, or a delay of the estimated finish time is displayed on the in-vehicle instrument 30. In this case, the driver can flexibly change the travel plan in accordance with the estimated finish time that is displayed from moment to moment. Therefore, the efficient travel plan can be created overall.

### (5) Other Embodiments

In the above-described embodiment, the description has been made on the case where the physical model or the time model is selected by comparing the remaining soot amounts. However, the physical model or the time model may be selected by comparing the estimated remaining DPF regeneration times.

In addition, in the above-described embodiment, the physical model is used to create the display model. Thus, the PM amount or the remaining soot amount, which corresponds to the temperature T_{EXH} and the flow rate M_{EXH} of the exhaust gas flowing into the DPF 21 at the time, is constantly calculated in the specified cycle. However, the display model may be calculated in the same manner as the calculation of the time model.

More specifically, the temperature T_{EXH}, the flow rate M_{EXH}, and the like of the exhaust gas flowing into the DPF 21 may be checked only in a certain period at the initiation of the regeneration, and the display may be made on the basis of the estimated display model based on those values.

Furthermore, the present invention may cooperate with a car navigation system. A traffic jam condition and the legal speed of a road to be traveled may be acquired from the car navigation system, and the estimated remaining DPF regeneration time may be calculated on the basis of those types of information.

### Reference Signs List

- 10:: Filter regeneration system
- 11:: Engine
- 12:: ECU
- 21:: DPF
- 22:: Temperature sensor
- 23:: Flow rate sensor
- 30:: In-vehicle instrument

## Claims

1. A filter regeneration system (10) for a DPF (21) collecting particulate matter, the filter regeneration system comprising:
an ECU (12) that is configured to control filter regeneration processing for the DPF (21), wherein
the ECU (12)
calculates a remaining soot amount (Rp) at a current time point on the basis of a physical model indicative of an actual remaining soot amount and calculates a remaining soot amount (Rt) at the current time point on the basis of a time model indicative of a theoretical remaining soot amount,
calculates an estimated remaining DPF regeneration time (Tp, Tt) at the current time point on the basis of larger one of the remaining soot amounts (Rp, Rt), and
notifies a driver of the estimated remaining DPF regeneration time (Tp, Tt).

2. The filter regeneration system according to claim 1, wherein
on the basis of the physical model, the ECU (12)
calculates a soot reduction amount in a specified cycle upon regeneration on the basis of a signal from a temperature sensor (22) measuring a temperature of exhaust gas flowing into the DPF (21) and a signal from a flow rate sensor (23) measuring a flow rate of the exhaust gas flowing into the DPF (21), and
calculates the remaining soot amount (Rp) at the current time point by subtracting the soot reduction amount from an integrated soot accumulation amount that is acquired in a specified cycle upon the regeneration of the DPF (21).

3. The filter regeneration system according to claim 1, wherein
on the basis of the time model, the ECU (12)
calculates the remaining soot amount (Rt) at the current time point on the basis of a linear function indicative of a linear relationship between time and the remaining soot amount from an integrated soot accumulation amount, which is acquired at initiation of the regeneration of the DPF (21), and a specified period.

4. The filter regeneration system according to claim 1, wherein
the ECU (12)
displays the estimated remaining DPF regeneration time (Tp, Tt) in an in-vehicle instrument (30).

5. An ECU (12) that is configured to control regeneration processing of a DPF (21) collecting particulate matter, wherein
the ECU (12)
calculates a remaining soot amount (Rp) at a current time point on the basis of a physical model indicative of an actual remaining soot amount and calculates a remaining soot amount (Rt) at the current time point on the basis of a time model indicative of a theoretical remaining soot amount,
calculates an estimated remaining DPF regeneration time (Tp, Tt) at the current time point on the basis of larger one of the remaining soot amounts (Rp, Rt), and
notifies a driver of the estimated remaining DPF regeneration time (Tp, Tt).

6. A filter regeneration program for a DPF (21) collecting particulate matter, wherein
the filter regeneration program makes a computer realize
a function of calculating a remaining soot amount (Rp) at a current time point on the basis of a physical model indicative of an actual remaining soot amount and calculating a remaining soot amount (Rt) at the current time point on the basis of a time model indicative of a theoretical remaining soot amount,
a function of calculating an estimated remaining DPF regeneration time (Tp, Tt) at the current time point on the basis of larger one of the remaining soot amounts (Rp, Rt), and
a function of notifying a driver of the estimated remaining DPF regeneration time (Tp, Tt).

## Patentansprüche

1. Filterregenerationssystem (10) für einen DPF (21), der Partikel sammelt, das Filterregenerationssystem umfassend:
ein Steuergerät (12), das dazu ausgebildet ist, eine Filterregenerationsverarbeitung für den DPF (21) zu steuern,
wobei
das Steuergerät (12)
eine verbleibende Rußmenge (Rp) zu einem aktuellen Zeitpunkt auf der Grundlage eines physikalischen Modells berechnet, das eine tatsächliche verbleibende Rußmenge angibt, und eine verbleibende Rußmenge (Rt) zu dem aktuellen Zeitpunkt auf der Grundlage eines Zeitmodells berechnet, das eine theoretische verbleibende Rußmenge angibt,
eine geschätzte verbleibende DPF-Regenerationszeit (Tp, Tt) zu dem aktuellen Zeitpunkt auf der Grundlage einer größeren der verbleibenden Rußmengen (Rp, Rt) berechnet, und
einen Fahrer über die geschätzte verbleibende DPF-Regenerationszeit (Tp, Tt) benachrichtigt.

2. Filterregenerationssystem nach Anspruch 1, wobei auf der Grundlage des physikalischen Modells das Steuergerät (12) eine Rußverringerungsmenge in einem vorgegebenen Zyklus bei Regeneration auf der Grundlage eines Signals von einem Temperatursensor (22), der eine Temperatur von Abgas misst, das in den DPF (21) strömt, und eines Signals von einem Strömungsratensensor (23), der eine Strömungsrate des Abgases misst, das in den DPF (21) strömt, berechnet, und die verbleibende Rußmenge (Rp) zu dem aktuellen Zeitpunkt durch Subtrahieren der Rußverringerungsmenge von einer integrierten Rußakkumulationsmenge, die in einem vorgegebenen Zyklus bei der Regeneration des DPF (21) erfasst wird, berechnet.

3. Filterregenerationssystem nach Anspruch 1, wobei auf der Grundlage des Zeitmodells das Steuergerät (12) die verbleibende Rußmenge (Rt) zu dem aktuellen Zeitpunkt auf der Grundlage einer linearen Funktion, die eine lineare Beziehung zwischen Zeit und der verbleibenden Rußmenge von einer integrierten Rußakkumulationsmenge, die bei Einleitung der Regeneration des DPF (21) erfasst wird, angibt, und eine vorgegebene Periode berechnet.

4. Filterregenerationssystem nach Anspruch 1, wobei das Steuergerät (12) die geschätzte verbleibende DPF-Regenerationszeit (Tp, Tt) in einem bordeigenen Instrument (30) anzeigt.

5. Steuergerät (12), das dazu ausgebildet ist, eine Regenerationsverarbeitung eines DPF (21) zu steuern, der Partikel sammelt, wobei
das Steuergerät (12)
eine verbleibende Rußmenge (Rp) zu einem aktuellen Zeitpunkt auf der Grundlage eines physikalischen Modells berechnet, das eine tatsächliche verbleibende Rußmenge angibt, und eine verbleibende Rußmenge (Rt) zu dem aktuellen Zeitpunkt auf der Grundlage eines Zeitmodells berechnet, das eine theoretische verbleibende Rußmenge angibt,
eine geschätzte verbleibende DPF-Regenerationszeit (Tp, Tt) zu dem aktuellen Zeitpunkt auf der Grundlage einer größeren der verbleibenden Rußmengen (Rp, Rt) berechnet, und
einen Fahrer über die geschätzte verbleibende DPF-Regenerationszeit (Tp, Tt) benachrichtigt.

6. Filterregenerationsprogramm für einen DPF (21), der Partikel sammelt, wobei
das Filterregenerationsprogramm bewirkt, dass ein Computer Folgendes realisiert:
eine Funktion des Berechnens einer verbleibenden Rußmenge (Rp) zu einem aktuellen Zeitpunkt auf der Grundlage eines physikalischen Modells, das eine tatsächliche verbleibende Rußmenge angibt, und des Berechnens einer verbleibenden Rußmenge (Rt) zu dem aktuellen Zeitpunkt auf der Grundlage eines Zeitmodells, das eine theoretische verbleibende Rußmenge angibt, eine Funktion des Berechnens einer geschätzten verbleibenden DPF-Regenerationszeit (Tp, Tt) zu dem aktuellen Zeitpunkt auf der Grundlage einer größeren der verbleibenden Rußmengen (Rp, Rt),
und
eine Funktion des Benachrichtigens eines Fahrers über die geschätzte verbleibende DPF-Regenerationszeit (Tp, Tt).

## Revendications

1. Système (10) de régénération de filtre pour un DPF (21) collectant des particules, le système de régénération de filtre comprenant :
une ECU (12) configurée pour commander un traitement de régénération de filtre pour le DPF (21),
l'ECU (12)
calculant une quantité de suies restante (Rp) à un instant actuel sur la base d'un modèle physique indiquant une quantité de suies restante réelle et calculant une quantité de suies restante (Rt) à l'instant actuel sur la base d'un modèle temporel indiquant une quantité de suies restante théorique,
calculant un temps de régénération de DPF restant estimé (Tp, Tt) à l'instant actuel sur la base de la plus grande des quantités de suies restantes (Rp, Rt), et
notifiant à un conducteur le temps de régénération de DPF restant estimé (Tp, Tt).

2. Système de régénération de filtre selon la revendication 1, dans lequel
sur la base du modèle physique, l'ECU (12)
calcule une quantité de réduction de suies dans un cycle spécifié lors de la régénération sur la base d'un signal issu d'un capteur de température (22) mesurant une température de gaz d'échappement s'écoulant dans le DPF (21) et d'un signal issu d'un capteur de débit (23) mesurant un débit des gaz d'échappement s'écoulant dans le DPF (21), et
calcule la quantité de suies restante (Rp) à l'instant actuel en soustrayant la quantité de réduction de suies d'une quantité d'accumulation de suies intégrée acquise dans un cycle spécifié lors de la régénération du DPF (21).

3. Système de régénération de filtre selon la revendication 1, dans lequel
sur la base du modèle temporel, l'ECU (12)
calcule la quantité de suies restante (Rt) à l'instant actuel sur la base d'une fonction linéaire indiquant une relation linéaire entre le temps et la quantité de suies restante à partir d'une quantité d'accumulation de suies intégrée, laquelle est acquise au lancement de la régénération du DPF (21), et d'une période spécifiée.

4. Système de régénération de filtre selon la revendication 1, dans lequel
l'ECU (12)
affiche le temps de régénération de DPF restant estimé (Tp, Tt) dans un instrument (30) embarqué dans un véhicule.

5. ECU (12) configurée pour commander un traitement de régénération d'un DPF (21) collectant des particules,
l'ECU (12)
calculant une quantité de suies restante (Rp) à un instant actuel sur la base d'un modèle physique indiquant une quantité de suies restante réelle et calculant une quantité de suies restante (Rt) à l'instant actuel sur la base d'un modèle temporel indiquant une quantité de suies restante théorique,
calculant un temps de régénération de DPF restant estimé (Tp, Tt) à l'instant actuel sur la base de la plus grande des quantités de suies restantes (Rp, Rt), et
notifiant à un conducteur le temps de régénération de DPF restant estimé (Tp, Tt).

6. Programme de régénération de filtre pour un DPF (21) collectant des particules,
le programme de régénération de filtre amenant un ordinateur à exécuter
une fonction de calcul d'une quantité de suies restante (Rp) à un instant actuel sur la base d'un modèle physique indiquant une quantité de suies restante réelle et de calcul d'une quantité de suies restante (Rt) à l'instant actuel sur la base d'un modèle temporel indiquant une quantité de suies restante théorique,
une fonction de calcul d'un temps de régénération de DPF restant estimé (Tp, Tt) à l'instant actuel sur la base de la plus grande des quantités de suies restantes (Rp, Rt), et
une fonction de notification à un conducteur du temps de régénération de DPF restant estimé (Tp, Tt).
